# EUROPEAN PATENT APPLICATION

(11) **EP 4 807 564 A1**
(43) Date of publication of application: **16.09.2026**
(21) Application number: 26161948.0
(22) Date of filing: 03.03.2026
(51) Int. Cl.: G06F 11/30, G06F 11/34, G06F 21/50, G06N 20/00

(54) **HIERARCHICAL SYSTEM STATE AGGREGATION METHOD AND APPARATUS**

(30) Priority: 11.03.2025 FI 20255202
(71) Applicant: Nokia Solutions and Networks Oy, 02610 Espoo (FI)
(72) Inventor: NOVÁCZKI, Szabolcs, Budapest (HU); ROSLONEK, Robert, Goledzinow (PL)
(74) Representative: Nokia EPO representatives

(57) **Abstract**

Described herein is a device for obtaining features relating to a higher-level entity and a plurality of lower-level entities included in the higher-level entity, wherein the lower-level entities are configured to communicate with each other to together provide a higher-level function performed by the higher-level entity, the device comprising: an input module configured to receive, from the plurality of lower-level entities, lower-level extracted features relating to the plurality of lower-level entities; and a feature extraction module configured to obtain higher-level extracted features relating to the higher-level entity and the plurality of lower-level entities based on the received lower-level extracted features, wherein the higher-level extracted features comprise: for each lower-level entity: at least one higher-level extracted feature for the each lower-level entity, representing a state of the each lower-level entity when communicating with the remaining lower-level entities, and at least one higher-level extracted feature for a relation between the each lower-level entity and the remaining lower-level entities, representing a state of the communication between the lower-level entities; for all lower-level entities: at least one higher-level extracted feature for a relation between the higher-level entity and all lower-level entities, representing a state of all lower-level entities when communicating with each other to together provide said function performed by the higher-level entity, wherein the device further comprises an output module configured to output the obtained higher-level extracted features.

## Description

### TECHNOLOGY

The present disclosure relates to system state aggregation, in particular to hierarchical system state aggregation using machine learning.

### BACKGROUND

Any discussion of the background art throughout the specification should in no way be considered as an admission that such art is widely known or forms part of common general knowledge in the field.

From a general network operations perspective, in numerous instances, the task of amalgamating granular, low-level data into a higher hierarchical structure presents itself as a significant challenge. Within complex systems, the most vital insights often stem from the deepest layers of implementation. It is at this level where software modules and processes actively generate data, frequently manifested in the form of computer logs. These logs serve as invaluable tools, offering system operators insights into the fundamental events unfolding within the system's intricate framework. By capturing and documenting these essential occurrences, computer logs play a pivotal role in facilitating a comprehensive understanding of system behavior and performance.

A computer log, often referred to simply as a "log" is a record of events, transactions, or activities that have occurred within a computer system or network. These logs are generated automatically by the operating system, applications, or other software and hardware components. They are essential for monitoring, diagnosing, and troubleshooting system performance and security issues.

While logs possess the potential to contain a wealth of information, they typically represent only a fraction of the entire system, specifically limited to the software module responsible for generating each log entry. However, in many scenarios, attention is directed towards higher-level components, such as PODs or CNFs (Cloud Native Network Functions). These entities serve as organizational frameworks for grouping software components and do not autonomously generate data. Instead, their functionality and purpose are realized through the collective operation and interaction of underlying software components.

Therefore, monitoring higher-level components necessitates the aggregation of data sourced from lower-level components. This process enables a more comprehensive understanding of the system's behavior and performance. However, extracting pertinent information about higher-level components, such as a CNFs, from the system calls of processes executing within the POD, presents a considerable challenge. The intricacies involved in correlating lower-level activities to higher-level functionalities add layers of complexity to the monitoring and analysis process. Consequently, achieving a cohesive view of system operation across different hierarchical levels demands sophisticated data aggregation techniques and analytical approaches.

In the event of security incidents or other similar occurrences, individual software components may exhibit seemingly normal operation, posing a challenge to detection efforts if monitoring is solely focused on these isolated components. However, scrutinizing the collective behavior of these software components may uncover more pronounced indications of abnormal activity. Thus, it becomes imperative to consolidate data from multiple software components to establish a comprehensive understanding and effectively detect anomalies. By aggregating information from various components, a more holistic view of system behavior can be attained, enabling more robust anomaly detection mechanisms. This approach not only enhances the reliability of detection but also ensures a more thorough assessment of potential threats or irregularities within the system.

These aggregation challenges are typically addressed by consolidating data from all software components within a higher-level module and feeding it into a single machine learning model. This model is trained to perform specific downstream tasks, such as anomaly detection or performance optimization. However, this approach tends to create siloed solutions, meaning the trained model is highly specialized and cannot be easily adapted or reused for other tasks. As a result, each new task or requirement necessitates the development and training of a new, separate model, which can be inefficient and resource intensive.

The aforementioned approach lacks the flexibility needed to adapt to changes in the implementation of higher-level components. For example, when new software components are introduced or old ones are removed, the existing machine learning model can no longer accurately process or analyze the data. This is because the model was specifically trained on the data from a particular set of software components, and any change in these components disrupts its ability to function correctly. Consequently, the model requires extensive retraining or modification to incorporate the new or altered components, leading to significant inefficiencies and increased resource consumption. This rigidity makes it difficult to maintain and update the system as it evolves, highlighting the need for more adaptable solutions.

In the majority of scenarios, the process of aggregating information brings about a consequential outcome: the lower-level details become obscured or entirely omitted. Consequently, the ability to reference back to these granular details is compromised, rendering root cause analysis unfeasible. This phenomenon occurs due to the inherent nature of aggregation, where the focus shifts from individual data points to overarching trends or patterns. As a result, the nuanced insights provided by lower-level information are often sacrificed in favor of a broader, more generalized perspective. This loss of granularity poses a significant challenge, particularly in troubleshooting and identifying the underlying causes of issues within complex systems. Without access to the fine-grained data captured at lower levels, effectively pinpointing the root cause of anomalies or discrepancies becomes an arduous task, hindering the overall diagnostic process.

Hence, there is a need to provide efficient aggregation of granular, low-level data into a higher hierarchical structure, so as to provide a comprehensive understanding of system behavior and performance based on the lower layers or levels, in particular the deepest layers or levels of implementation.

There is a further need to provide a cohesive view of system operation across different hierarchical levels considering the complexity of the system state aggregation due to the mulitple levels.

There is a further need to provide easily adaptable and flexible system state aggragation using a universal configuration / method without the need of development and training of a new, separate model for a new task, so as to avoid inefficiency and resource waste.

There is a further need to provide easily adaptable and flexible system state aggragation that does not require extensive retraining or modification to incorporate new or altered components in the system as the system evolves, so as to avoid significant inefficiencies and increased resource consumption.

There is a further need to provide not only a comprehensive understanding of system behavior and performance, but also access to the fine-grained data captured at lower levels, so as to avoid the loss of granularity and the lower-level details, particularly in troubleshooting and identifying the underlying causes of issues within complex systems.

### SUMMARY

In accordance with a first aspect of the present disclosure, there is provided a device for obtaining features relating to a higher-level entity and a plurality of lower-level entities included in the higher-level entity, wherein the lower-level entities are configured to communicate with each other to together provide a higher-level function performed by the higher-level entity, the device comprising:
an input module configured to receive, from the plurality of lower-level entities, lower-level extracted features relating to the plurality of lower-level entities; and
a feature extraction module configured to obtain higher-level extracted features relating to the higher-level entity and the plurality of lower-level entities based on the received lower-level extracted features, wherein the higher-level extracted features comprise:
   for each lower-level entity:
      at least one higher-level extracted feature for the each lower-level entity, representing a state of the each lower-level entity when communicating with the remaining lower-level entities, and
      at least one higher-level extracted feature for a relation between the each lower-level entity and the remaining lower-level entities, representing a state of the communication between the lower-level entities,
   for all lower-level entities:
      at least one higher-level extracted feature for a relation between the higher-level entity and all lower-level entities, representing a state of all lower-level entities when communicating with each other to together provide said function performed by the higher-level entity,
wherein the device further comprises an output module configured to output the obtained higher-level extracted features.

In some examples, the lower-level extracted features and the higher-level extracted features are provided in the form of a relational graph, wherein nodes of the graph represent the lower-level entities and the higher-level entity, wherein edges of the graph represent relations between the lower-level entities and between the higher-level entity and the lower-level entities.

In some examples, the feature extraction module is configured based on a relational embedding model.

In some examples, the feature extraction module is configured based on unsupervised learning.

In accordance with a second aspect of the present disclosure, there is provided a system comprising a plurality of hierarchical levels of entities, wherein entities at each level each comprises at least one entity from a corresponding lower level of the each level, wherein entities at a lower level are configured to communicate with each other to together provide a function performed by a corresponding higher level hierarchically above said lower level, wherein the system is configured to obtain, at at least one level, features relating to said corresponding lower level by:
for each entity at the at least one level, extracting features from entities from the corresponding lower level of the each entity by using the device according to any of the first aspect and its related examples, and
providing the extracted features as an input to entities from a corresponding higher level of the each level that includes the each entity,
   wherein the system is configured to propagate said extraction from the lowest level to the highest level included in the system and provide a final output for all levels and all entities included in the system,
wherein the system comprises, for the at least one level, said device according to according to any of the first aspect and its related examples.

In some examples, the system is configured, at one or more levels, with readout points for providing the output of entities at the one or more level for being further analyzed.

In some examples, the feature extraction model at each level is configured to provide a level-specific function, wherein preferably the level-specifical functions at different levels are different.

In some examples, the system is a 5G core cloud native system.

In some examples, the levels include, from the highest level to the lowest level, one or more of the following: a System level, a Cloud Native Network Functions, CNF, level, a POD level, a Container level and a Process level.

In some examples, an entity at the Process level is configured to perform System Application Programming Interface, API, calls between the Process level and OS kernel, wherein for the Process level, the input module is configured to receive the performed System API calls.

In some examples, the each level is configured to dynamically include new entities, or delete or re-configure existing entities.

In accordance with a third aspect of the present disclosure, there is provided a method of a device configured for obtaining features relating to a higher-level entity and a plurality of lower-level entities included in the higher-level entity, wherein the lower-level entities are configured to communicate with each other to together provide a higher-level function performed by the higher-level entity, the method comprising:
an input step of receiving, from the plurality of lower-level entities, lower-level extracted features relating to the plurality of lower-level entities; and
a feature extraction step of obtaining higher-level extracted features relating to the higher-level entity and the plurality of lower-level entities based on the received lower-level extracted features, wherein the higher-level extracted features comprise:
   for each lower-level entity:
      at least one higher-level extracted feature for the each lower-level entity, representing a state of the each lower-level entity when communicating with the remaining lower-level entities,
      at least one higher-level extracted feature for a relation between the each lower-level entity and the remaining lower-level entities, representing a state of the communication between the lower-level entities,
   for all lower-level entities:
      at least one higher-level extracted feature for a relation between the higher-level entity and all lower-level entities, representing a state of all lower-level entities when communicating with each other to together provide said function performed by the higher-level entity,
wherein the method further comprises an output step of outputting the obtained higher-level extracted features.

In accordance with a fourth aspect of the present disclosure, there is provided a method of a system comprising a plurality of hierarchical levels of entities, wherein entities at each level each comprises at least one entity from a corresponding lower level of the each level, wherein entities at a lower level are configured to communicate with each other to together provide a function performed by a corresponding higher level hierarchically above said lower level, wherein the method comprises obtaining, at at least one level, features relating to said corresponding lower level by:
for each entity at the at least one level, extracting features from entities from the corresponding lower level of the each entity by using the method according to the third aspect, and
providing the extracted features as an input to entities from a corresponding higher level of the each level that includes the each entity,
   wherein said extraction propagates from the lowest level to the highest level included in the system, wherein the system provides a final output for all levels and all entities included in the system.

In accordance with a fifth aspect of the present disclosure, there is provided a computer program comprising instructions for causing an apparatus to perform the method according to the third aspect, or for causing an apparatus to perform the method according to the fourth aspect.

In accordance with a sixth aspect of the present disclosure, there is provided a memory storing computer readable instructions for causing an apparatus to perform the method according to the third aspect, or for causing an apparatus to perform the method according to the fourth aspect.

In addition, according to some other example embodiments, there is provided, for example, a computer program product for a wireless communication device comprising at least one processor, including software code portions for performing the respective steps disclosed in the present disclosure, when said product is run on the device. The computer program product may include a computer-readable medium on which said software code portions are stored. Furthermore, the computer program product may be directly loadable into the internal memory of the computer and/or transmittable via a network by means of at least one of upload, download and push procedures.

While some example embodiments will be described herein with particular reference to the above application, it will be appreciated that the present disclosure is not limited to such a field of use, and is applicable in broader contexts.

Notably, it is understood that methods according to the present disclosure relate to methods of operating the apparatuses according to the above example embodiments and variations thereof, and that respective statements made with regard to the apparatuses likewise apply to the corresponding methods, and vice versa, such that similar description may be omitted for the sake of conciseness. In addition, the above aspects may be combined in many ways, even if not explicitly disclosed. The skilled person will understand that these combinations of aspects and features/steps are possible unless it creates a contradiction which is explicitly excluded.

Implementations of the disclosed apparatuses may include using, but not limited to, one or more processor, one or more application specific integrated circuit (ASIC) and/or one or more field programmable gate array (FPGA). Implementations of the apparatus may also include using other conventional and/or customized hardware such as software programmable processors, such as graphics processing unit (GPU) processors.

Other and further example embodiments of the present disclosure will become apparent during the course of the following discussion and by reference to the accompanying drawings.

### BRIEF DESCRIPTION OF THE DRAWINGS

Example embodiments of the disclosure will now be described, by way of example only, with reference to the accompanying drawings in which:
Figure 1 schematically illustrates an exemplary 5G core architecture according to an example embodiment of the present disclosure;
Figure 2 schematically illustrates an exemplary CNF reference architecture according to an example embodiment of the present disclosure;
Figure 3 schematically illustrates an exemplary configuration for capturing and aggregating characteristics of lower level building blocks according to an example embodiment of the present disclosure;
Figure 4 schematically illustrates an exemplary configuration for reading out captured characteristics of lower level building blocks according to an example embodiment of the present disclosure;
Figures 5 and 6 schematically illustrate exemplary configurations relating to a relational embedding model according to an example embodiment of the present disclosure;
Figure 7 schematically illustrates exemplary systems comprising a plurality of levels of entites, to which the present disclosure is appliable;
Figure 8 schematically illustrates an exemplary configuration of a device for system embedding aggregation according to an example embodiment of the present disclosure;
Figure 9 schematically illustrates an exemplary configuration of a method for system embedding aggregation according to an example embodiment of the present disclosure;
Figure 10 schematically illustrates an exemplary procedure for registering embedding data service according to an example embodiment of the present disclosure;
Figure 11 schematically illustrates an exemplary CNF under security attack according to an example embodiment of the present disclosure;
Figure 12 schematically illustrates an exemplary single CNF embedding pipeline configuration according to an example embodiment of the present disclosure;
Figure 13 schematically illustrates an exemplary training and operation of a security anomaly detection according to an example embodiment of the present disclosure; and
Figure 14 schematically illustrates exemplary anomaly detection results according to an example embodiment of the present disclosure.

### DESCRIPTION OF EXAMPLE EMBODIMENTS

In the following, different exemplifying embodiments will be described using, as an example of a communication network to which examples of embodiments may be applied, a communication network architecture based on 3GPP standards for a communication network, such as a 5G/NR, without restricting the embodiments to such an architecture, however. It is apparent for a person skilled in the art that the embodiments may also be applied to other kinds of communication networks where mobile communication principles are integrated with a D2D (device-to-device) or V2X (vehicle to everything) configuration, such as SL (side link), e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc. Furthermore, without loss of generality, the description of some examples of embodiments is related to a mobile communication network, but principles of the disclosure can be extended and applied to any other type of communication network, such as a wired communication network.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules, etc., that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed unit (DU) or a centralized/central unit (CU), which controls a respective coverage area or cell(s) and with which one or more communication stations such as communication elements or functions, like user devices or terminal devices, like a user equipment (UE), or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or applicati on capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The following description may provide further details of alternatives, modifications and variances: a gNB comprises e.g., a node providing NR user plane and control plane protocol terminations towards the UE, and connected via the NG interface to the 5GC, e.g., according to 3GPP TS 38.300 V16.6.0 (2021-06) section 3.2 incorporated by reference.

A gNB Central Unit (gNB-CU) comprises e.g., a logical node hosting e.g., RRC, SDAP and PDCP protocols of the gNB or RRC and PDCP protocols of the en-gNB that controls the operation of one or more gNB-DUs. The gNB-CU terminates the F1 interface connected with the gNB-DU.

A gNB Distributed Unit (gNB-DU) comprises e.g., a logical node hosting e.g., RLC, MAC and PHY layers of the gNB or en-gNB, and its operation is partly controlled by the gNB-CU. One gNB-DU supports one or multiple cells. One cell is supported by only one gNB-DU. The gNB-DU terminates the F1 interface connected with the gNB-CU.

A gNB-CU-Control Plane (gNB-CU-CP) comprises e.g., a logical node hosting e.g., the RRC and the control plane part of the PDCP protocol of the gNB-CU for an en-gNB or a gNB. The gNB-CU-CP terminates the E1 interface connected with the gNB-CU-UP and the F1-C interface connected with the gNB-DU.

A gNB-CU-User Plane (gNB-CU-UP) comprises e.g., a logical node hosting e.g., the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-DU, e.g., according to 3GPP TS 38.401 V16.6.0 (2021-07) section 3.1 incorporated by reference.

Different functional splits between the central and distributed unit are possible, e.g., called options:
Option 1 (1A-like split):
   - The function split in this option is similar to the 1A architecture in DC. RRC is in the central unit. PDCP, RLC, MAC, physical layer and RF are in the distributed unit.
Option 2 (3C-like split):
   - The function split in this option is similar to the 3C architecture in DC. RRC and PDCP are in the central unit. RLC, MAC, physical layer and RF are in the distributed unit.
Option 3 (intra RLC split):
   - Low RLC (partial function of RLC), MAC, physical layer and RF are in the distributed unit. PDCP and high RLC (the other partial function of RLC) are in the central unit.
Option 4 (RLC-MAC split):
   - MAC, physical layer and RF are in the distributed unit. PDCP and RLC are in the central unit.

Or else, e.g., according to 3GPP TR 38.801 V14.0.0 (2017-03) section 11 incorporated by reference.

A gNB supports different protocol layers, e.g., Layer 1 (L1) - physical layer.

The layer 2 (L2) of NR is split into the following sublayers: Medium Access Control (MAC), Radio Link Control (RLC), Packet Data Convergence Protocol (PDCP) and Service Data Adaptation Protocol (SDAP), where e.g.:
- The physical layer offers to the MAC sublayer transport channels;
- The MAC sublayer offers to the RLC sublayer logical channels;
- The RLC sublayer offers to the PDCP sublayer RLC channels;
- The PDCP sublayer offers to the SDAP sublayer radio bearers;
- The SDAP sublayer offers to 5GC QoS flows;
- Comp. refers to header compression and Segm. To segmentation;
- Control channels include (BCCH, PCCH).

Layer 3 (L3) includes e.g., Radio Resource Control (RRC), e.g., according to 3GPP TS 38.300 V16.6.0 (2021-06) section 6 incorporated by reference.

A RAN (Radio Access Network) node or network node like e.g. a gNB, base station, gNB CU or gNB DU or parts thereof may be implemented using e.g. an apparatus with at least one processor and/or at least one memory (with computer-readable instructions (computer program)) configured to support and/or provision and/or process CU and/or DU related functionality and/or features, and/or at least one protocol (sub-)layer of a RAN (Radio Access Network), e.g. layer 2 and/or layer 3.

The gNB CU and gNB DU parts may e.g., be co-located or physically separated. The gNB DU may even be split further, e.g., into two parts, e.g., one including processing equipment and one including an antenna. A Central Unit (CU) may also be called BBU/REC/RCC/C-RAN/V-RAN, O-RAN, or part thereof. A Distributed Unit (DU) may also be called RRH/RRU/RE/RU, or part thereof. Hereinafter, in various example embodiments of the present disclosure, the CU-CP (or more generically, the CU) may also be referred to as a (first) network node that supports at least one of central unit control plane functionality or a layer 3 protocol of a radio access network; and similarly, the DU may be referred to as a (second) network node that supports at least one of distributed unit functionality or the layer 2 protocol of the radio access network.

A gNB-DU supports one or multiple cells, and could thus serve as e.g., a serving cell for a user equipment (UE).

A user equipment (UE) may include a wireless or mobile device, an apparatus with a radio interface to interact with a RAN (Radio Access Network), a smartphone, an in-vehicle apparatus, an IoT device, a M2M device, or else. Such UE or apparatus may comprise: at least one processor; and at least one memory including computer program code; wherein the at least one memory and the computer program code are configured to, with the at least one processor, cause the apparatus at least to perform certain operations, like e.g. RRC connection to the RAN. A UE is e.g., configured to generate a message (e.g., including a cell ID) to be transmitted via radio towards a RAN (e.g., to reach and communicate with a serving cell). A UE may generate and transmit and receive RRC messages containing one or more RRC PDUs (Packet Data Units).

The UE may have different states (e.g., according to 3GPP TS 38.331 V16.5.0 (2021-06) sections 42.1 and 4.4, incorporated by reference).

A UE is e.g., either in RRC_CONNECTED state or in RRC_INACTIVE state when an RRC connection has been established.

In RRC_CONNECTED state a UE may:
- store the AS context;
- transfer unicast data to/from the UE;
- monitor control channels associated with the shared data channel to determine if data is scheduled for the data channel;
- provide channel quality and feedback information;
- perform neighboring cell measurements and measurement reporting.

The RRC protocol includes e.g. the following main functions:
- RRC connection control;
- measurement configuration and reporting;
- establishment/modification/release of measurement configuration (e.g. intra-frequency, inter-frequency and inter-RAT measurements);
- setup and release of measurement gaps;
- measurement reporting.

The general functions and interconnections of the described elements and functions, which also depend on the actual network type, are known to those skilled in the art and described in corresponding specifications, so that a detailed description thereof may omitted herein for the sake of conciseness. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station / BS, a gNB, a radio network controller, a core network control element or function, such as a gateway element, or other network elements or functions, as described herein, and any other elements, functions or applications may be implemented by software, e.g., by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors. It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

References are now made to the figures. In particular, it is to be noted that identical or like reference numbers used in the figures of the present disclosure may, unless indicated otherwise, indicate identical or like elements, such that repeated description thereof may be omitted for reasons of conciseness.

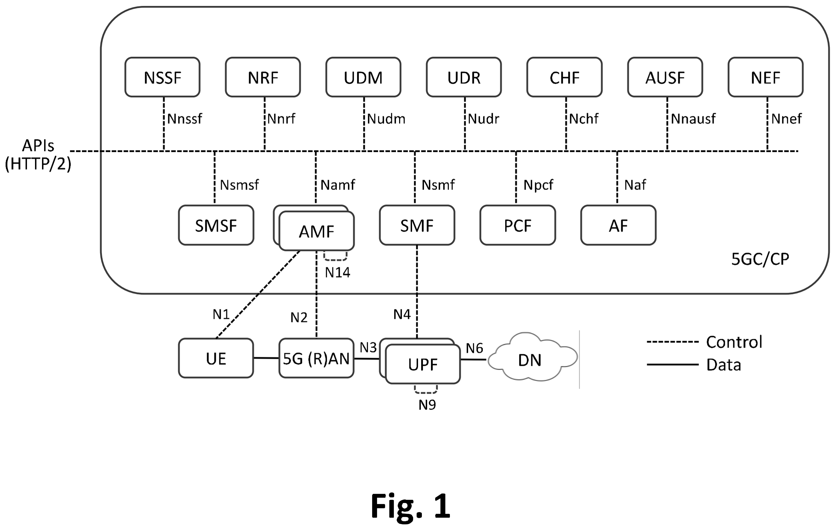

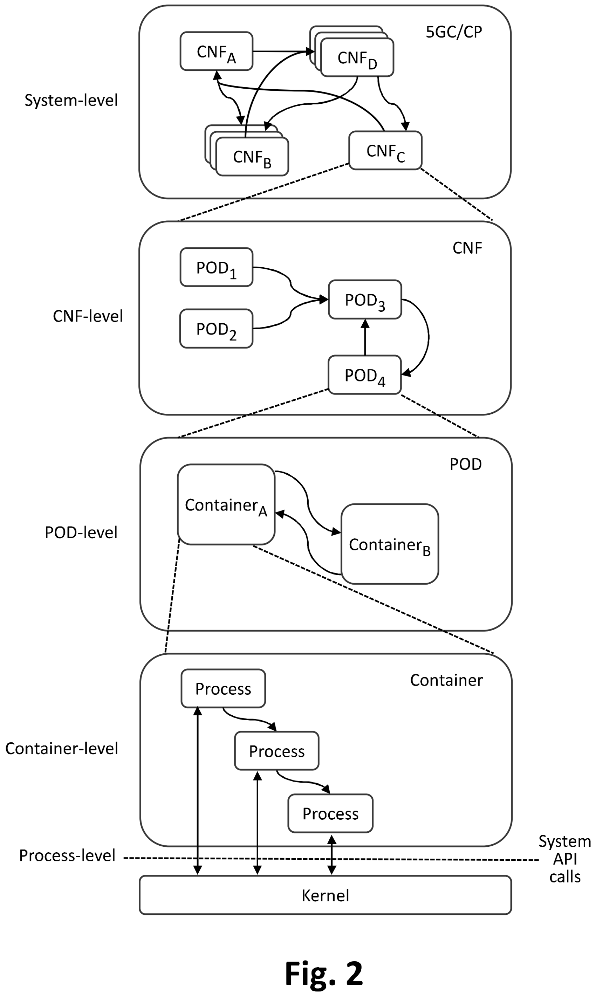

In the following, some of the technologies that relate to the present disclosure are introduced, as illustrated in Figures 1 and 2. One exemplary application area is cloud-native systems, like 5G core, thus in the present disclosure the proposed solution is explained using 5G core and its primary, cloud-native deployment model as an example for assisting the understanding of (an example of implementing) the solution provided in the present disclosure. The present disclosure is however applicable to any system with a hierarchical structure, e.g., any tree structured hierarchy configured for performing specific tasks.

### 5G core architecture

Figure 1 schematically illustrates an exemplary 5G core architecture according to an example embodiment of the present disclosure. The 5G core architecture is built around the Service-Based Architecture (SBA), which enhances flexibility and scalability by using a cloud-native approach. SBA defines a set of network functions (NFs) that communicate with each other through standardized APIs, allowing for dynamic and efficient interactions. In a cloud-native environment NFs are referred as Cloud Native Network Functions, CNFs.

### CNF reference architecture

Figure 2 schematically illustrates an exemplary CNF reference architecture according to an example embodiment of the present disclosure. In 5G networks, the primary deployment model is based on containerized building blocks following cloud native principles. Kubernetes, an open-source technology, is widely used to manage these containers. Most modern 5G systems have adopted Kubernetes as their container management platform, making it the de-facto standard for managing containerized environments. In Kubernetes, a POD represents one or more containers in a deployment unit, comprising an image or set of images and a manifest file.

Although 3GPP standards for 5G network functions are not specifically centered around containers or Kubernetes PODs, they define Cloud Native Network Functions (CNFs) as the primary functional units. A 5G CNF consists of a single 5G entity formed by an interconnected set of PODs, each handling specific subfunctions like data ingestion, load balancing, database operations, processing, fault management, or external traffic communication.

Cloud Native paradigms, which emphasize high cohesion and low coupling, allow these subfunctions (PODs) to be redistributed and scaled independently as required by the 5G network or user traffic demand.

### System API calls (syscalls)

Given that container technology is based on isolating processes and follows the stateless nature of Cloud Native principles, monitoring containerized elements is best achieved by inspecting their interactions with the OS kernel, rather than installing agents inside them, as is done with virtual machines. Containers use isolated Linux processes, which adhere to the POSIX standard and communicate with the OS kernel through system API call, or syscalls in short, as illustrated in Figure 2.

Linux system API call tracing is a technique used to monitor and analyze the interactions between user applications (processes) and the kernel by capturing these syscalls. Syscalls are fundamental operations where a user-space application requests a service from the kernel, such as file operations, process management, or network communications. Tracing these calls is invaluable for debugging, performance tuning, and security analysis.

The communication between containers and the kernel (through syscalls) contains a wealth of data, which is crucial for understanding the actual state of the observed system. Each syscall represents a specific request from a single process to the OS kernel to reserve, access, fetch, or release resources such as files, hardware interfaces, or memory. By evaluating these low-level requests, one can establish a baseline and fingerprint of normal activity (normal states), making it possible to identify rare or anomalous behavior (anomalous states), caused by e.g., performance issues, HW (Hardware) or SW (Software) faults or security attacks.

In the example application area of 5G core archetectures, syscall traces of processes running in a cloud native 5G core environment may be used as the primary data source.

### Unsupervised Information and semantic embedding

Unsupervised embedding refers to the process of transforming data into a continuous numeric vector space (embedding) without using labeled information. In this context, "unsupervised" means that the embedding is created using algorithms that do not require pre-labeled training examples. These embeddings aim to capture the underlying structure and relationships within the data based solely on the data's inherent properties.

Unsupervised semantic embedding is a technique in natural language processing (NLP) used to represent words, phrases, sentences, or documents in a continuous vector space without the need for labeled training data. The goal is to capture the semantic meaning of text so that similar meanings are represented by vectors that are close together in this space.

Unsupervised semantic embedding for computer logs involves transforming log entries into continuous vector representations that capture the semantic meaning of these logs without the need for labeled data. This process helps in understanding, analyzing, and extracting patterns from the log data, which is crucial for tasks such as anomaly detection, system monitoring, and troubleshooting.

### Graph Neural Networks (GNNs) and relational embedding

Graph Neural Networks (GNNs) are a class of neural networks specifically designed to process data that is structured as graphs. Unlike traditional neural networks that handle data in Euclidean space (like images or text), GNNs can directly work with graph-structured data, which is more complex and can represent a variety of relationships and interactions, such as social networks, molecular structures, and knowledge graphs as well as communication networks, program structure, and in the context of the present disclosure the implementation/deployment structure of processes, containers, PODs, CNFs and the 5G core network.

In a graph, data is represented as nodes (vertices) and edges (links between nodes). GNNs leverage this structure by performing computations over the nodes and their connections. The key idea is to aggregate and transform information from a node's neighbors (and potentially their neighbors) iteratively to produce meaningful representations (called embeddings) for tasks like node classification, link prediction, and graph classification (downstream tasks).

GNNs have shown remarkable success in various applications due to their ability to capture complex dependencies and relationships inherent in graph data. Popular variants include Graph Convolutional Networks (GCNs), Graph Attention Networks (GATs), and Graph Recurrent Neural Networks (GRNNs), each incorporating different mechanisms for message passing and aggregation.

In the present disclosure, one example is using GNNs to aggregate process level syscall data up to the 5G core level using unsupervised embedding.

### Graph Convolution

Graph convolution, or graph convolutional networks (GCNs), extends the concept of convolution from traditional grid-like data structures, such as images, to graph-structured data. In graphs, data is represented by nodes and edges, where each node can have associated features.

The primary idea behind graph convolution is to aggregate information from a node's neighborhood. For each node, this neighborhood includes the node itself and its directly connected nodes. The features of these neighboring nodes are combined, typically using a weighted sum. The weights can be learned during the training process and often depend on the graph's structure. This aggregation process helps each node to update its features based on its local context within the graph.

To manage varying node degrees, the adjacency matrix of the graph is usually normalized. The aggregated features are then transformed using a linear transformation, followed by the application of a non-linear activation function, such as ReLU, to introduce non-linearity into the model.

Multiple graph convolutional layers can be stacked together, enabling the model to capture information from larger neighborhoods, encompassing nodes that are multiple steps away. This multi-layer structure allows GCNs to effectively learn representations that reflect both the graph's structure and the features of the nodes.

As illustrated above, the present disclosure generally seeks to provide a comprehensive understanding of the overall system behavior and performance across different hierarchical levels, considering the complexity of the system state aggregation due to the mulitple layers, and yet preferably maintaining still access to the fine-grained data captured at lower levels, so as to avoid the loss of granularity and the lower-level details which may be necessary for pinpointing the root causes of issues within the complex system.

Further, the present disclosure generally seeks to provide easily adaptable and flexible system state aggragation using a universal configuration / method without the need of development and training of a new, separate model for a new task, so as to avoid inefficiency and resource waste.

Further, the present disclosure generally seeks to provide adaptable and flexible system state aggragation that is still applicable even if the system evolves by including / deleting / altering new components, without extensive retraining or modification to incorporate new or altered components in the system, so as to avoid significant inefficiencies and increased resource consumption.

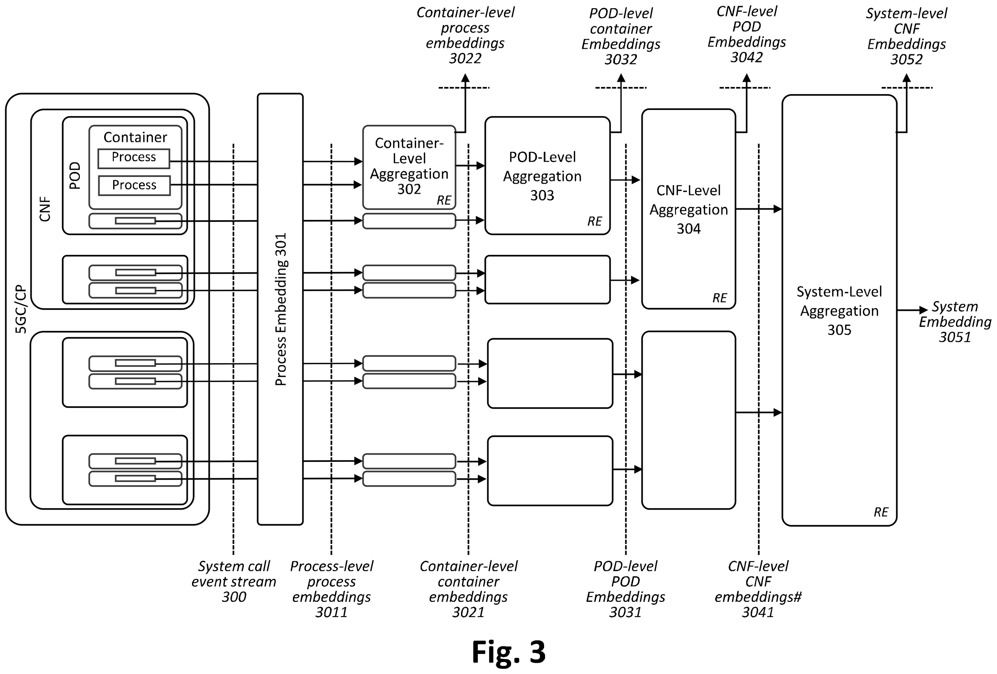

In view of the above, as schematically illustrated in Figure 3, it is proposed in accordance with the present disclousure providing a model for capturing characteristics of lower level building blocks such as PODs or Containers and transferring it into higher level composites using provided embeddings aggregation technique represented by relational embedding (RE) blocks. In the present disclosure, for ease of understanding, 5G core architecture is used as an example. The following description of the proposed configuration / method is however appliable to all kinds of systems that include multiple hierarchical levels, wherein a higher level comprises components / entites from a lower level that communicate with each other to provide a function performed by this higher level.

The proposed example solution in Figure 3 is a multi-level unsupervised relational embedding pipeline designed to aggregate system behavior from low-level data sources through hierarchically organized relational embedding layers. As an example the following description relates to cloud native 5G core deployments. The solution focuses on capturing process-level syscall (kernel API call) events and progressively aggregating them up to a system-wide (e.g., 5G core) perspective. This is achieved through multiple aggregation layers, each leveraging unsupervised machine learning models (relational embedding models) to create embeddings of the corresponding layer. Each aggregation layer creates joint embeddings that represent the collective state and behavior of the underlying layers. The aggregation hierarchy follows the modelled system's deployment architecture.

Besides the hierarchical organization of embedding aggregation layers the central feature of the architecture is the relational embedding (RE) block. This block is responsible for creating aggregated embeddings at each hierarchical level by considering the relationships between lower-level embeddings. The aggregated embeddings encapsulate not only the states of lower-level entities as individual building blocks but also the states of entities within the same hierarchical level. This means that the embedding represents a superposition of the states of all entities. For instance, the Container-level embedding of a process represents its own state as well as the states of the other processes (as the environment of that process). Similarly, the Container-level embedding of a Container encodes the states of all the processes within that Container.

As shown in Figure 3, the system call event stream 300 comprises the system API calls from the lowest level of the hierarchical system, i.e., the process level that communicates with the OS kernel for performing the fundamental operations where a user-space application requests a service from the kernel, such as file operations, process management, or network communications, including e.g., the read command, the write command, the access of resources and etc.

The system call event stream 300 is then processed by the process embedding module or step 301, for e.g., converting the text data included in the system call event stream 300 into numerical data that can be further processed by the later layers / levels of modules or steps as will be explained shortly in the following. Accordingly, the output of the process embedding 301 including the Process-level process embeddings 3011, provides the input of the next aggregation module / step / layer. Note that the Process-level process embeddings refer to embeddings provided for the relevant processes, wherein these process embeddings are provided by the process level.

In the example of Figure 3, at the Container-level aggregagion module / step 302, the output of the process embedding 301 for the processes included in the corresponding container is provided as input to the Container-level aggregagion module / step 302. The aggregation processing at the Container-level aggregagion module / step 302 yields the Container-level container embeddings 3021 as well as preferably the Container-level process embeddings 3022. Note that the Container-level container embeddings 3021 refer to embeddings provided for the relevant container, here for the container corresponding to the Container-level aggregation 302, wherein these container embeddings are provided by the container level and provide an overall understanding (i.e., feature extraction) of all processes included in this container. Further, the Container-level process embeddings 3021 refer to embeddings provided for the processes included in this corresponding container, wherein for each process included in this container, the Container-level process embedding 3021 provides an understanding of the each process as well as the relation of the each process to the remaining processes included in this container.

The above processing at the Container-level aggregagion module / step 302 is then similarly performed and aggregates through the whole system, including the POD-Level Aggregation 303 (providing POD-level POD embeddings 3031 and POD-level container embeddings 3032), the CNF-Level Aggregation 304 (providing CNF-level CNF embeddings 3041 and CNF-level POD embeddings 3042), and the System-Level Aggregation 305 (providing System-level system embeddings 3051 and System-level CNF embeddings 3052).

In the present disclosure, the embeddings 3022, 3032, 3042 and 3052 are optional and may be provided via breakout points or readout points included in the configuration as shown in Figure 3.

In the following, a more detailed description of the embedding pipeline configuration in Figure 3 is provided.

### Embeddings initialization:

The embeddings used for initialization are provided by the previous (lower) aggregation layer, except the first layer (i.e., the Container-level aggregation) which receives the embeddings from the process embedding blocks.

The updated and initialized relation graph is fed into the relational embedding module which computes the aggregated embeddings via several relation embedding layers. One possible technical realization of the relation embedding module is using Graph Convolutional Networks (GCNs). These contain one or more Graph Convolutional Layers. These layers take the relation graph and update the node feature vectors according to the structure of the relation graph (see the above description, Graph Convolution). The last aggregation layer provides a graph structurally identical to the input relation graph but with updated embedding. These embeddings can be access via a Readout function. The Readout function provides the embeddings for the next aggregation layer as well as for the breakout points.

### Container-level aggregation:

The Container-level aggregation takes process level embeddings and aggregates them into Container-level embeddings using the relational embedding model. The Container-level Container embedding encodes the actual state of all processes, preferably into a single embedding vector. The Container-level process embeddings encode the actual state of individual processes in relation to other processes running in the same POD.

### POD-level aggregation:

The POD-level aggregation takes container-level container embeddings and aggregates them into POD-level embeddings using the relational embedding model. The POD-level POD embedding encodes the actual state of all processes, preferably into a single embedding vector. The POD-level container embeddings encode the actual state of individual processes in relation to other processes running in the same POD.

### CNF-level aggregation:

The CNF-level aggregation does the same type of aggregation as it's POD/level counterpart, but instead of process-level embedding, it takes POD-level POD embeddings as input and aggregates them into CNF-level embeddings. The CNF-level CNF embedding encodes the actual state of all PODs into a single embedding vector. The CNF-level POD embeddings encode the actual state of individual PODs in relation to other PODs running in the same CNF.

### System-level aggregation:

Finally, system-level aggregates the CNF-level CNF embeddings.

### Process/POD/CNF embeddings:

Generally speaking, the process/POD/CNF-level embedding blocks are optional, although in many embodiments they are necessary or useful. In the described embodiment the task of the process-level embedding building block is to create numeric input for the first relational embedding block, i.e., in the Container-level embedding. In many cases the raw input data (the syscalls events in the example embodiment) is not numeric. In these cases, the process-level embedding is required. Further embedding blocks can be added into the pipeline, that take for instance the temporal aspect of the process level behavior into account.

At higher levels, i.e., at POD and CNF level the primary input (embeddings from the lower level) of the aggregation is numeric. The embedding block might still be needed, e.g., to take temporal aspects into account or enrich the encoding with information from other, entity level data sources.

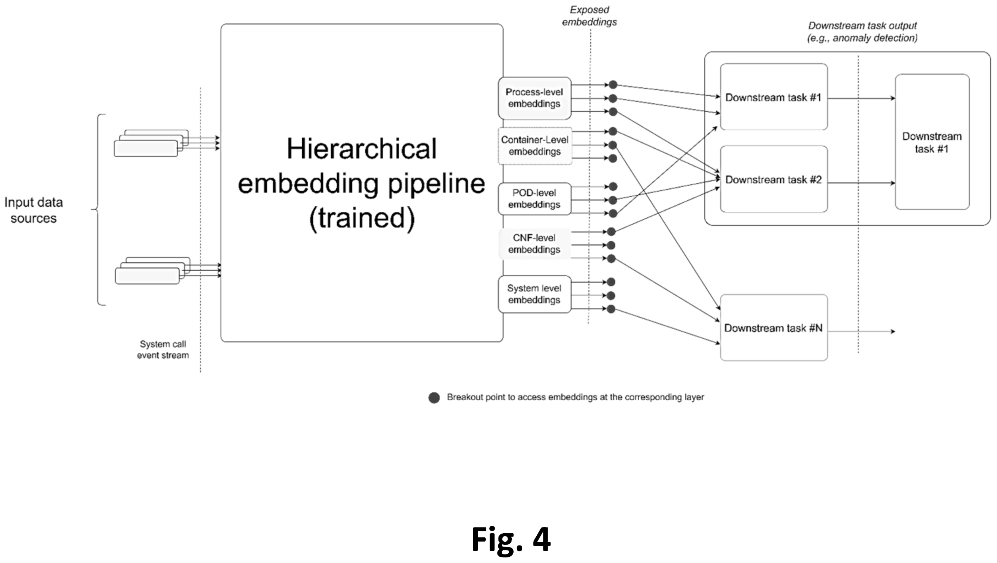

Figure 4 schemetically illustrates an exemplary implementation of breakout points according to the present disclosure. The hierarchical embedding pipeline provides reusable, generic embeddings for specific downstream tasks, through so called breakout points, which are exposed by the system via service APIs (integration with SBA, SBMA). The various downstream tasks can subscribe to the task-specific embedding services. The downstream task can be any machine learning based or non-machine learning based system/logic.

As shown in Figure 4, by selectively providing embeddings from different levels as well as different entities from those levels, specific tasks can be carried out based on those provided embeddings. Thereby, access to and utilization of the more fine-grained data at the lower levels are ensured.

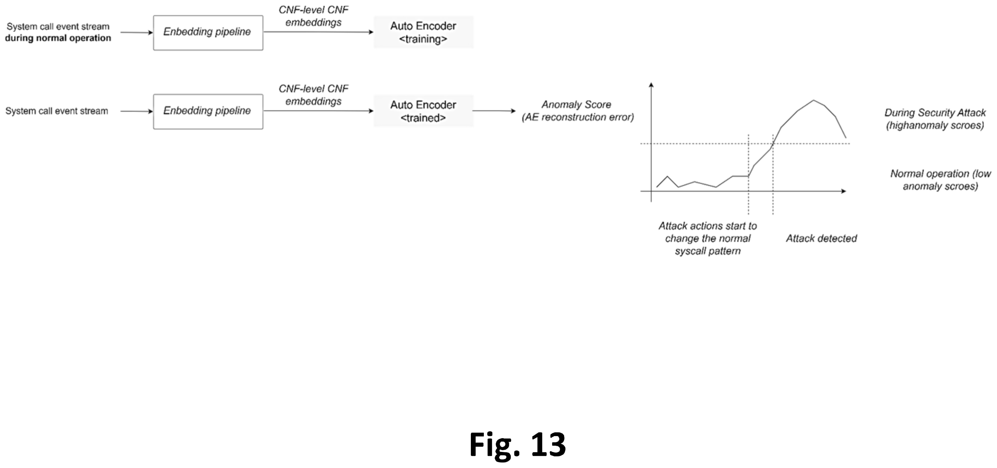

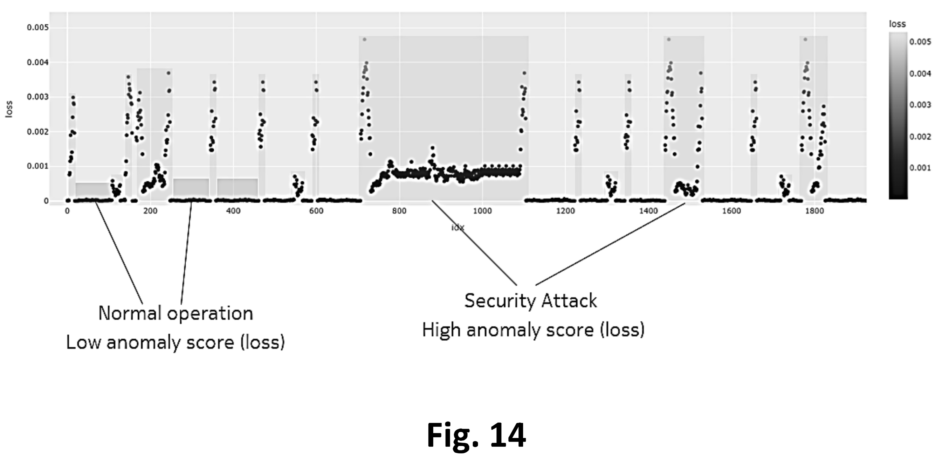

In particular, according to the present disclosure, in different technical use cases, the output(s) of the embedding pipeline can automatically impact the network through a downstream task. On example downstream task is security anomaly detection (see also the example in Figures 13 and 14), wherein in case an anomaly is detected, this can be displayed to an operator and/or automatically trigger a security correction action on some parts of the network. Another example downstream task is predictive maintenance which may involve automatically triggering a maintenance action on parts of the network based on the output(s) of the embedding pipeline. Another example downstream task is performance optimization which may involve automatically triggering a performance tuning action on parts of the network based on the output(s) of the embedding pipeline.

Advantages of the proposed solution according to the present disclosure and its possible implementations include:

### Multi-level Aggregation:

The pipeline collects detailed syscall data at the process level and aggregates this data through several intermediate layers (Container, POD, CNF, Core). This results in embeddings that reflect broader system behavior at each aggregation layer.

### Unsupervised Learning:

The embedding models used at each level may be trained using unsupervised machine learning techniques. This allows the models to learn and represent the underlying patterns in the syscall data without requiring labeled training data.

### Reusable, Generic Embeddings:

At each layer of aggregation, the pipeline produces embeddings that are designed to be generic and reusable. These embeddings are not tied to any specific downstream application, making them versatile for various use cases.

### Access Points for Downstream Tasks:

The pipeline may include breakout points at various levels of aggregation, allowing access to embeddings at different levels of abstraction. This flexibility enables the embeddings to be integrated into other models or pipelines tailored to specific tasks, such as anomaly detection, predictive maintenance or performance optimization. Detailed explanation regarding those exemplary possible technical use cases are described above in connection with Figure 4, wherein output(s) of the embedding pipeline can automatically impact the network through a corresponding downstream task.

### Customization and Fine-tuning:

While the generic embeddings provided by the pipeline can be directly used in downstream applications, there is also the option to clone and fine-tune the embedding models. This allows for the creation of specialized embeddings that are optimized for specific tasks or datasets, enhancing the performance of the downstream models.

In summary, the architecture proposed in the present disclosure is designed to follow a hierarchical embedding aggregation pipeline (see Figure 3 the blueprint architecture proposed in the present disclosure). At each hierarchical level, a specialized component called the relational embedding block collects and aggregates the embeddings from the lower level to create higher-level embeddings. This process continues iteratively, with each subsequent level taking the previous level's embeddings as input and further aggregating them, following the hierarchical structure up to the system level.

Breakout points can be established at each aggregation level, allowing access to the embeddings at that specific level. The embeddings at any given level are categorized into two groups:
- For each new input, a fresh embedding is generated for the entire level as well as
- for all lower-level entities within that hierarchy.

For instance, at each Container level aggregation block, the relational embedding module computes a new Container-level embedding for the entire Container, and a Container-level embedding for each process running in the Container whenever any of the process level embeddings is changed. This propagates up the whole hierarchy.

### Relational embedding:

A central feature of the architecture proposed in the present disclosure is the relational embedding block. This block is responsible for creating aggregated embeddings at each hierarchical level by considering the relationships between lower-level embeddings. The aggregated embeddings encapsulate not only the states of lower-level entities as individual building blocks but also the states of entities within the same hierarchical level. This means that the embedding represents a superposition of the states of all entities. For instance, the Container-level embedding of a process represents its own state as well as the states of the other processes (as the environment of that process). Similarly, the Container-level embedding of a Container encodes the states of all the processes within that Container.

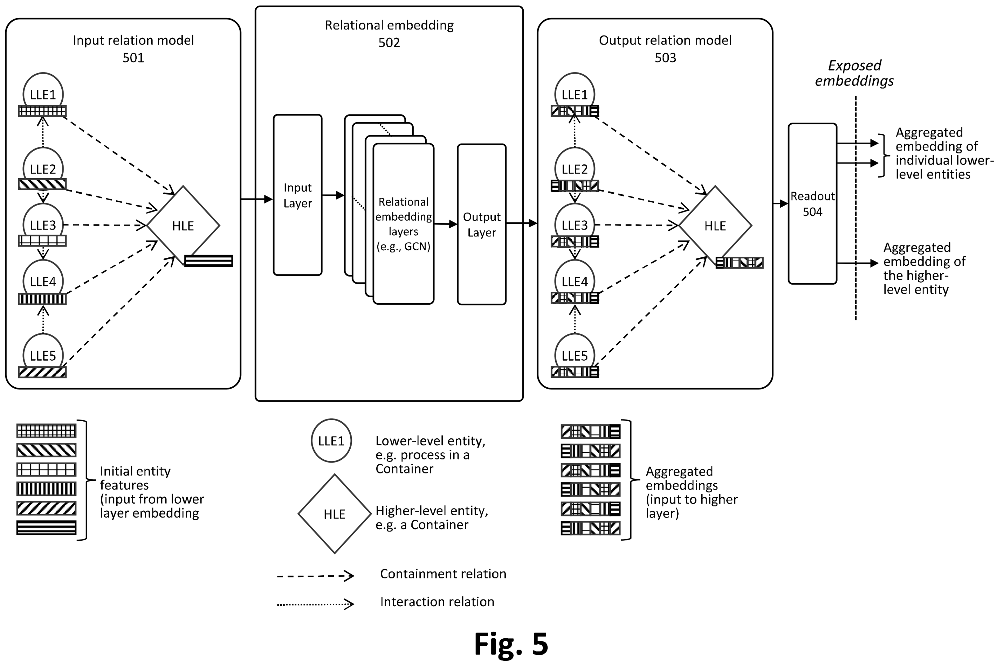

Figure 5 illustrates an exemplary configuration of a relational embedding model according to the present dislosure. Each hierarchical level is represented by a relation graph that has nodes representing the Lower-Level Entities (LLE) (e.g., processes at the Container level aggregation module) as well as a single node representing the Higher-Level Entity (HLE) (e.g., the Container that contains the processes).

Edges represent relationships among LLEs, and between LLEs and the HLE. The primary type of relationship considered is containment. This represents the relation between the HLE and every LLE contained by the HLE. Thus, the minimum edge set of a relation graph are the containment type edges connecting every LLE to the HLE.

Another possible type of relationship is interaction, which denotes active interaction or strong interdependency between two lower-level entity. For example, certain processes within a Container may frequently communicate with each other or use each other's services, while some processes within the same Container operate independently.

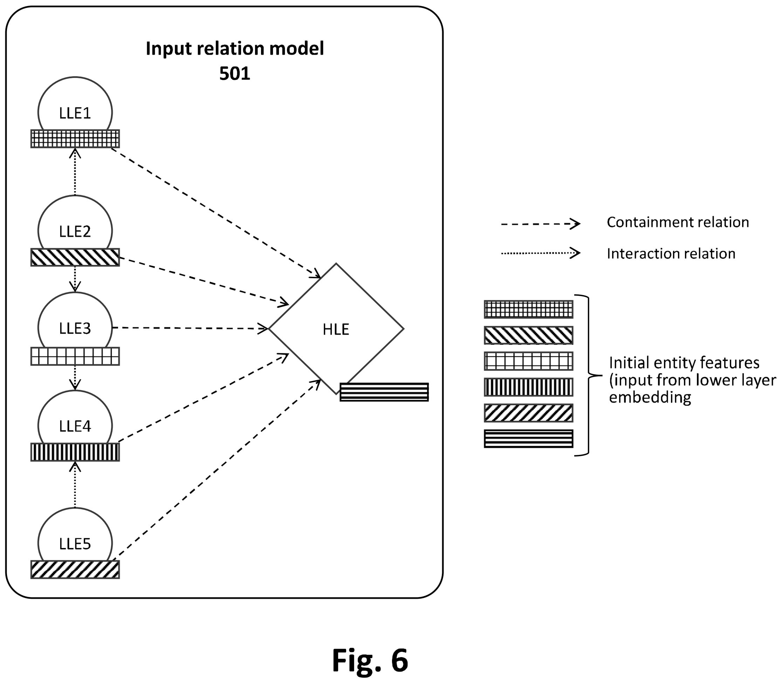

As shown in Figure 5, LLE1-LLE5 are respectively provided with a containment relation to the corresponding HLE, wherein this HLE includes LLE1-LLES. In other words, LLE1-LLE5 are the corresponding lower level entities that communicate with each other so that the corresponding HLE performs a higher level function. Therein, the interaction relation beween LLE1-LLE5 may be for example as illustrated with the dotted line arrows. As shown in the input relation model 501 (see also Figure 6), each LLE has their own chracteristics illustrated by the different patterns of fillings inside the frame of the rectangular shape underneath each LLE, wherein through the interactions between the LLEs the HLE has its own chracteristics illustrated by the pattern of filling inside the frame of the rectangular shape underneath this HLE. Therefore, the chracteristics that can be extracted at the HLE level may comprise three aspects, namely the characteristics of each LLE included in the HLE, the characteristics of each LLE in relation to the remaining LLEs included in the HLE (i.e., the interaction relation), as well as the overall characristics of the HLE capturing the characteristics of all LLEs including their relations to one another and their containment to the HLE (i.e. the containment relation).

As shown in Figure 5, after providing the lower level embeddings from the LLE1-LLE5 as an input to the relation embedding module 502, an output is provided including the above three aspects of the chracteristics of the HLE, which is illustrated in the output relation model 503, wherein the rectangular shape underneath each LLE now incorporates the charactieristics of the remaining LLEs and the rectangular shape underneath the HLE now incorporates the charactieristics of all LLEs.

As shown in Figure 5, the output of the system aggregation may further include a selective readout 504, with which it may be selected which of the above-described aspects may be output. For example, the readout module 504 may be configured to output aggregated embedding of individual lower-level entities, e.g., aggregated embedding of LLE1 including the chracteristics of its relation to the LLEs with which LLE1 interact. For example, the readout module 404 may additionally or alternatively output aggregated embedding of the higher-level entity, e.g., the aggregated embedding of the HLE including the chracteristics of all LLEs included in the HLE.

Additionally, there may be other types of relationships among lower-level entities in other embodiments of the present disclosure.

The relational embedding technology, e.g., typically a Graph Neural Network (GNN), is highly flexible and capable of modeling various types of entities and relationships. This allows for a comprehensive and nuanced representation of the hierarchical structure and the interactions within the system.

Note that the relation graph does not have a fixed structure only a fixed schema. The schema defines the type of nodes and edges, but actual graph instances can contain any number of nodes and edges of the types defined by the graph schema. This makes the approach flexible to adapt to dynamic changes in the system. Consider that during the operation of a system new processes, Containers, PODs even CNFs (or instances of these) can be added or activated, while old ones can be removed, deactivated or simply being idle for a while. These dynamic changes can be smoothly handled by the relation embedding module, as it accepts any relation graph as long as it conforms to the defined schema.

With the general structure and workflow of the relational embedding model, each time a new embedding is available of any of the LLEs (or LLEs added or removed) the relation graph is updated. Nodes and edges are added or removed according to the actual changes and the nodes are initialized with the corresponding embeddings. Such changes in the relation graph or in the hierarchical system however do not require modification of the relational embedding module or the functioning thereof. A trained relational embedding model is easily adaptable to be applied to evolving hierarchical systems.

Note 1: The architecture shown in the present disclosure is applied to the CNF reference architecture of a 5G/6G mobile network merely as an illustrative example, but in general, it can be applied to any, even not containerized, systems, to aggregate process level behavior up to system level, through hierarchical relation embedding.

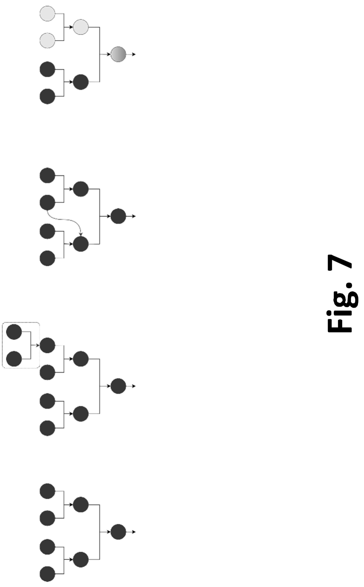

Note 2: The architecture shows five, symmetric hierarchy levels (process, Container, POD, CNF, System ) just as an example, but in general there can be any number of levels, that does not even need to be symmetric: any tree structured hierarchy can be build with the same concept, even with multiple heads. Figure 7 shows exemplary systems comprising a plurality of levels of entites, to which the present disclosure is appliable.

Note 3: The lowest level data source is the system call traces of processes, but in general any data source can be fed into the pipeline, although some might need certain preprocessing steps.

Note 4: Models at a certain level of the hierarchy can be single instances, i.e., a single model is trained for process level sequential embedding or the POD-level relational embedding, or multiple instances, i.e., different models are trained for different levels.

Note 5: in the present disclosure, the "lower" level is lower in relation to the input module configured to aggregate features from this "lower" level, wherein the "higher" level is higher in relation to the to-be-aggregated features from the "lower" level. Further, a lower / higher level entity may comprise a software component at the respective level providing a corresponding function or service at that level.

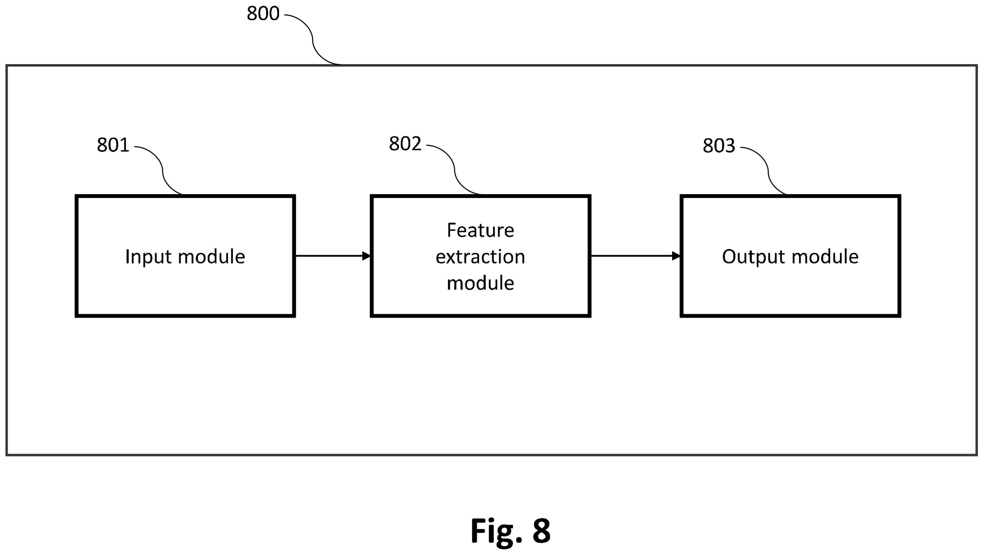

Figure 8 schematically illustrates an exemplary configuration of a device 800 for system embedding aggregation according to the present disclosure. A relational embedding module as described above according to Figures 5 and 6 may provide an implementation of the proposed device.

The device shown in Figure 8 is configured for obtaining features relating to a higher-level entity and a plurality of lower-level entities included in the higher-level entity, wherein the lower-level entities are configured to communicate with each other to together provide a higher-level function performed by the higher-level entity. As described above, an entity may be a software component for providing a corresponding function or service at the respective level.

The device comprises an input module 801, a feature extraction module 802 and an output module 803.

The input module 801 is configured to receive, from the plurality of lower-level entities, lower-level extracted features relating to the plurality of lower-level entities. Therein, lower-level extracted features relating to the lower-level entities refer to features relating to the lower-level entities that are extracted at the same lower level. For example, the Process-level process embeddings 3011, the Container-level container embeddings 3021, the POD-level POD embeddings 3031, and the CNF-level CNF embeddings 3041 respectively provide the features extracted at the lower level for the same lower level (note that the System-level system embeddings 3051 in Figure 3 is at the highest level). Therein, the "lower level" is lower in relation to the input module, i.e., the lower-level extracted features are output from the lower level and provided as an input to the input module for performing aggregation at a corresponding higer level.

The feature extraction module 802 is configured to obtain higher-level extracted features relating to the higher-level entity and the plurality of lower-level entities based on the received lower-level extracted features. Therein, the higher-level extracted features refer to features relating to both the higher-level entity and the lower-level entities that are extracted at the higher level.

Therein, the higher-level extracted features comprise for each lower-level entity: at least one higher-level extracted feature for the each lower-level entity, representing a state of the each lower-level entity when communicating with the remaining lower-level entities, and at least one higher-level extracted feature for a relation between the each lower-level entity and the remaining lower-level entities, representing a state of the communication between the lower-level entities. That is, the higher-level extracted features comprise the "interaction relation" aspect shown in Figure 5.

For example, the Container-level process embeddings 3022, the POD-level Container embeddings 3032, the CNF-level POD embeddings 3042 and the System-level CNF embeddings 3052 in Figure 3 respectively provide features relating to the lower-level entities and extracted at the higher level based on the input (note that the Process-level is the lowest level). Those features include features of each lower-level entity and the relation between the each lower-level entity and the remaining entites in the same lower level.

Further, the higher-level extracted features further comprise for all lower-level entities: at least one higher-level extracted feature for a relation between the higher-level entity and all lower-level entities, representing a state of all lower-level entities when communicating with each other to together provide said function performed by the higher-level entity. That is, the higher-level extracted features comprise the "containment relation" aspect shown in Figure 5.

For example, the Process-level process embeddings 3011, the Container-level container embeddings 3021, the POD-level POD embeddings 3031, the CNF-level CNF embeddings 3041 and the System-level system embeddings 3051 in Figure 3 respectively provide features relating to the higher-level entity and extracted at the higher level based on the input. Therein, the "higher" level is higher in relation to the input to the device 800.

Therefore, for example, the CNF-level CNF embeddings 3041 can be "lower" level extracted in a sense that they are to be input to the device 800 for aggregation at a level higher than the CNF level, i.e., the system level, and can also be "higher" level extracted in a sense that they are extracted at the CNF level based on embeddings from the corresponding lower level, i.e., the POD level.

As shown in Figure 8, the device 800 further comprises an output module 803 configured to output the obtained higher-level extracted features. The output module may further comprise breakout / readout points for outputting any one of the above higher-level extracted features, in particular the higher-level extracted lower-level features for e.g., identifying and addressing issues at the lower level. The output module 803 is further preferably configured to provide the extracted embeddings / features to perform specific tasks including e.g., network management, network security. For example, desired embeddings from specific levels and/or specific entities may be applied depending on the task to be performed, for example anomaly detection at specific levels.

Preferably, the lower-level extracted features and the higher-level extracted features are provided in the form of a relational graph, wherein nodes of the graph represent the lower-level entities and the higher-level entity, wherein edges of the graph represent relations between the lower-level entities (i.e., the interaction relation) and between the higher-level entity and the lower-level entities (i.e., the containment relation). Details in this aspect are provided above, which are not repeated here.

Preferably, the feature extraction module 802 is configured based on a Graph-based machine learning model. Details in this aspect are provided above, which are not repeated here.

Preferably, the feature extraction module 802 is configured based on a relational embedding model. Details in this aspect are provided above, which are not repeated here.

Preferably, the feature extraction module 802 is configured based on unsupervised learning. Details in this aspect are provided above, which are not repeated here.

The present disclosure further provides a system comprising a plurality of hierarchical levels of entities, wherein entities at each level each comprises at least one entity from a corresponding lower level of the each level, wherein entities at a lower level are configured to communicate with each other to together provide a function performed by a corresponding higher level hierarchically above said lower level. Figure 2 may provide an example implementation of such a system.

The system is configured to obtain, at at least one level, features relating to said corresponding lower level by: for each entity at the at least one level, extracting features from entities from the corresponding lower level of the each entity by using the device according to Figure 8, and providing the extracted features as an input to entities from a corresponding higher level of the each level that includes the each entity.

The system is configured to propagate said extraction from the lowest level to the highest level included in the system and provide a final output for all levels and all entities included in the system.

The system preferably comprises, for the at least one level, the device according to Figure 8.

Preferably, the system is configured, at one or more levels, with readout points for providing the output of entities at the one or more level for being further analyzed.

Preferably, the feature extraction model at each level is configured to provide a level-specific function, wherein preferably the level-specifical functions at different levels are different. Thereby, by e.g., including breakout points at the respective level for reading out the higher-level extracted lower-level features, the lower-level characteristics are obtained while providing an overall understanding of the whole system, such that the granularity is not lost.

According to the present disclosure, the system may be implemented in the form of a hierarchical system comprising levels of software components (i.e., entities) to provide corresponding functions and services at the respective levels.

As described above, the system according to the present disclosure however may be any hierarchical system, wherein at least one of the levels included in the system may apply the device according to Figure 8 for extracting features from the corresponding lower level.

Similar aspects explained above for the device according to Figure 8 are not repeated here.

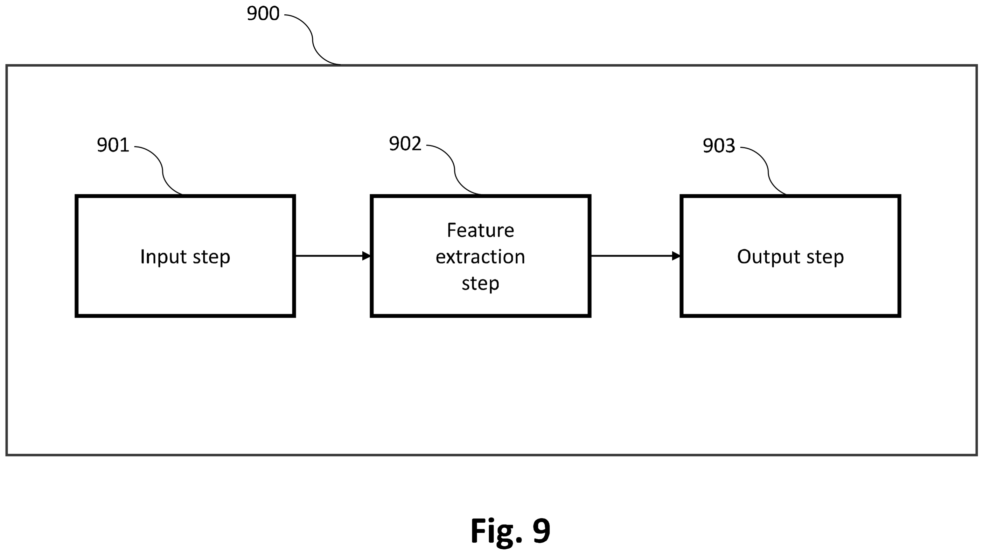

Figure 9 schematically illustrates an exemplary configuration of a method 900 of a device for system embedding aggregation according to the present disclosure. The method 900 comprises an input step 901, a feature extraction step 902 and an output step 903 that respectively correspond to the input module 801, the feature extraction module 802 and the output module 803 according to Figure 8. Similar aspects explained above for the device according to Figure 8 are not repeated here.

The present disclosure further provides a method of the above-described system, comprising obtaining, at at least one level, features relating to said corresponding lower level by: for each entity at the at least one level, extracting features from entities from the corresponding lower level of the each entity by using the method 900, and providing the extracted features as an input to entities from a corresponding higher level of the each level that includes the each entity, wherein said extraction propagates from the lowest level to the highest level included in the system, wherein the system provides a final output for all levels and all entities included in the system. Similar aspects explained above for the system are not repeated here.

### Application use cases e.g., from a security operations perspective:

Telecom operators often involve multiple vendors in constructing their 5G networks. Each vendor provides 5G functions that are compatible with 3GPP standards, packaged as Cloud Native Functions (CNFs). These CNFs, while standardized, have their own specific behaviors, capabilities, and internal dependencies.

In IT systems, the primary boundary for operations is around single PODs or with deployments consisting of several PODs. For 5G Network Elements, however, the primary boundary is the CNF, and all operational activities, including security monitoring, must adhere to this wider boundary.

Security Operations Center teams of Communication Service Providers (CSPs) need specialized tools to monitor CNFs from various telecom vendors. These tools must understand the granularity and specificities of telecom networks to effectively identify and respond to security incidents.

Monitoring security incidents at the CNF level in modern container-based telecom networks presents challenges. Containers' ephemeral nature makes it impractical to install agents within the building blocks as being hard to diagnose. As vendors ship its CNFs as larger units composed of multiple containers providing documentation on product level not at Container granularity. Additionally, monitoring at the infrastructure level using kernel syscalls is challenging due to the vast number of messages exchanged, making it unmanageable for humans.

Therefore, security operations teams face several challenges: understanding the default behavior of 5G CNFs (comprising multiple interworking PODs) through syscalls, diagnosing cyber-attacks within CNF PODs, and identifying patterns of adversarial activities across different parts of a single CNF. There needs to be a system-level understanding of these activities, built from lower-level building blocks, to effectively monitor and respond to security incidents in 5G networks.

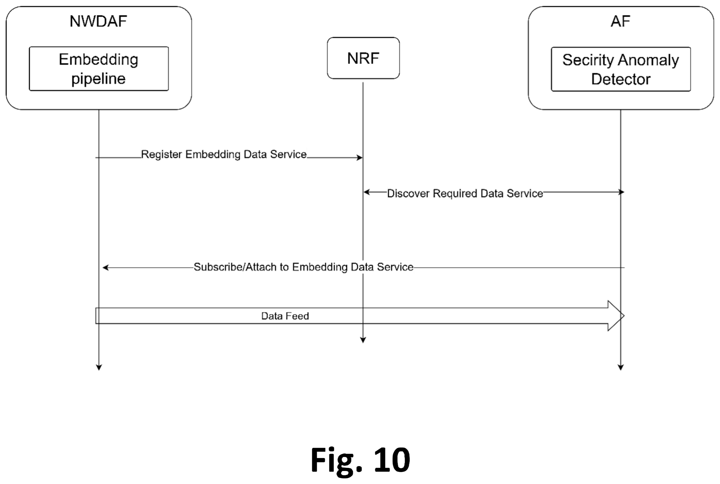

It is proposed a possible integration/implementation option for the proposed solution in accordance with the present disclosure. Here it is assumed a trained embedding pipeline. The breakout points concept makes the solution well fit into the Service Based Architecture of the 5G core control plane system (Figure 1). The trained instance of the solution can be integrated into the NWDAF and extend its offered services with the exposed embeddings, i.e., breakout points, offering data access services for the embeddings at different levels of the embedding hierarchy. As shown in Figure 10, the services can be registered at the NFR for that other NFs and AFs can discover the services. The security anomaly detection is a specific downstream task and can be a trusted AF.

In this section it is shown how a trained embedding pipeline can be used to build a security anomaly detection solution.

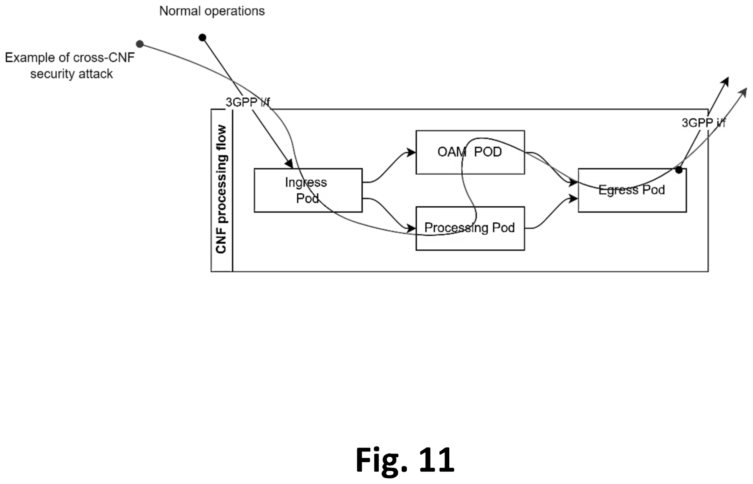

As shown in Figure 11, assuming a single CNF with 4 PODs realizing its functionality, the task is to build an anomaly detector that can detect cross-CNF (affection all/multiple PODs) security attacks. Assume the simple hierarchical embedding pipeline for the CNF. Assume that each POD is a single a single container, thus omit the container level aggregation step.

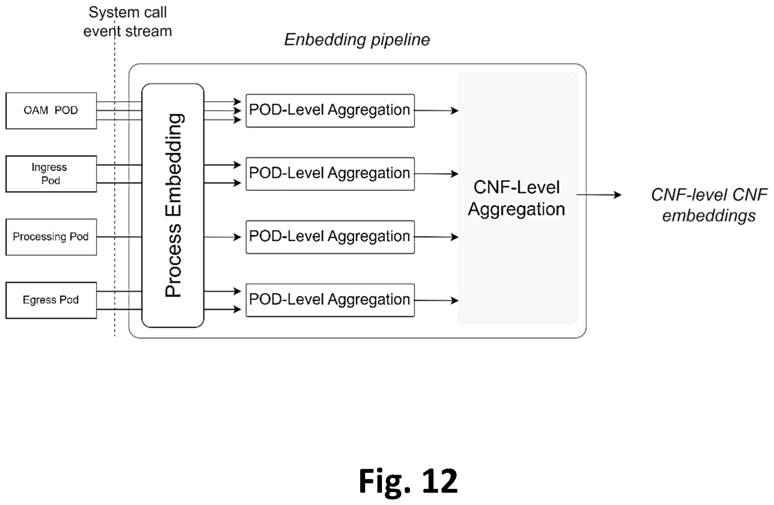

As shown in Figure 12, the trained embedding pipeline takes the syscall traces from the PODs and create an aggregated CNF-level embedding which is updated at every new syslog event of any of the processes running in any of the PODs.

The anomaly detector (AD) module can be a simple auto encoder. As shown in Figure 13, to train the AD module, there is a need to feed it with CNF-level embeddings generated during the normal operation of the CNF.

Once the AD module is trained it switches to inference mode: it continues to take the CNF-level embeddings as input and tries to reconstruct them at the output. In case of embeddings that are like ones used during training (normal operation) the error between the reconstructed and the input embedding vectors will be low.

At time of security incidents, the pattern of the process syscalls might change, resulting in previously unseen CNF-level embeddings. These cannot be reconstructed with low error, thus the reconstruction error can be used as an anomaly score as it will be increased during security incidents and low during normal operation. Figure 14 shows example anomaly detection results.

In this exemplary technical use case, the output(s) of the embedding pipeline (e.g., the output(s) of the corresponding ML model for the embedding aggregation at the respective level) can automatically impact the network through a downstream task of security anomaly detection. In case an anomaly is detected, this can for example be displayed to an operator and/or automatically trigger a security correction action on some parts of the network.

It is noted that, although in the above-illustrated example embodiments (with reference to the figures), the messages communicated/exchanged between the network components/elements may appear to have specific/explicit names, depending on various implementations (e.g., the underlining technologies), these messages may have different names and/or be communicated/exchanged in different forms/formats, as can be understood and appreciated by the skilled person.

According to some example embodiments, there are also provided corresponding methods suitable to be carried out by the apparatuses (network elements/components) as described above, such as the UE, the CU, the DU, etc.

It should nevertheless be noted that the apparatus (device) features described above correspond to respective method features that may however not be explicitly described, for reasons of conciseness. The disclosure of the present document is considered to extend also to such method features. In particular, the present disclosure is understood to relate to methods of operating the devices described above, and/or to providing and/or arranging respective elements of these devices.

Further, according to some further example embodiments, there is also provided a respective apparatus (e.g., implementing the UE, the CU, the DU, etc., as described above) that comprises at least one processing circuitry, and at least one memory for storing instructions to be executed by the processing circuitry, wherein the at least one memory and the instructions are configured to, with the at least one processing circuitry, cause the respective apparatus to at least perform the respective steps as described above.

Yet in some other example embodiments, there is provided a respective apparatus (e.g., implementing the UE, the CU, the DU, etc., as described above) that comprises respective means configured to at least perform the respective steps as described above.

It is to be noted that examples of embodiments of the disclosure are applicable to various different network configurations. In other words, the examples shown in the above described figures, which are used as a basis for the above discussed examples, are only illustrative and do not limit the present disclosure in any way. That is, additional further existing and proposed new functionalities available in a corresponding operating environment may be used in connection with examples of embodiments of the disclosure based on the principles defined.

It should also to be noted that the disclosed example embodiments can be implemented in many ways using hardware and/or software configurations. For example, the disclosed embodiments may be implemented using dedicated hardware and/or hardware in association with software executable thereon. The components and/or elements in the figures are examples only and do not limit the scope of use or functionality of any hardware, software in combination with hardware, firmware, embedded logic component, or a combination of two or more such components implementing particular embodiments of the present disclosure.

It should further be noted that the description and drawings merely illustrate the principles of the present disclosure. Those skilled in the art will be able to implement various arrangements that, although not explicitly described or shown herein, embody the principles of the present disclosure and are included within its spirit and scope. Furthermore, all examples and embodiment outlined in the present disclosure are principally intended expressly to be only for explanatory purposes to help the reader in understanding the principles of the proposed method. Furthermore, all statements herein providing principles, aspects, and embodiments of the present disclosure, as well as specific examples thereof, are intended to encompass equivalents thereof.

## Claims

1. A device for monitoring a Cloud Native network Function, CNF, the CNF comprising a higher-level entity and a plurality of lower-level entities included in the higher-level entity, wherein the lower-level entities are configured to communicate with each other to together provide a higher-level function performed by the higher-level entity, the device comprising:
an input module configured to receive, from the plurality of lower-level entities, lower-level extracted features relating to the plurality of lower-level entities; and
a feature extraction module configured to obtain higher-level extracted features relating to the higher-level entity and the plurality of lower-level entities based on the received lower-level extracted features, wherein the higher-level extracted features comprise:
for each lower-level entity:
at least one higher-level extracted feature for the each lower-level entity, representing a state of the each lower-level entity when communicating with the remaining lower-level entities, and
at least one higher-level extracted feature for a relation between the each lower-level entity and the remaining lower-level entities, representing a state of the communication between the lower-level entities,
for all lower-level entities:
at least one higher-level extracted feature for a relation between the higher-level entity and all lower-level entities, representing a state of all lower-level entities when communicating with each other to together provide said function performed by the higher-level entity,
wherein the device further comprises an output module configured to output the obtained higher-level extracted features and a downstream application configured for performing at least one of security anomaly detection, predictive maintenance and performance optimization based on the higher-level extracted features.

2. The device according to claim 1, wherein the lower-level extracted features and the higher-level extracted features are provided in the form of a relational graph, wherein nodes of the graph represent the lower-level entities and the higher-level entity, wherein edges of the graph represent relations between the lower-level entities and between the higher-level entity and the lower-level entities.

3. The device according to any one of claims 1 to 2, wherein the feature extraction module is configured based on a relational embedding model.

4. The device according to any one of claims 1 to 3, wherein the feature extraction module is configured based on unsupervised learning.

5. The device according to any one of claims 1 to 4, wherein CNF comprises entities organized in a plurality of hierarchical levels, the levels including, from the highest level to the lowest level, one or more of the following: a System level, a Cloud Native Network Functions, CNF, level, a POD level, a Container level and a Process level.

6. The device according to claim 5, wherein the CNF is included is a 5G or 6G core cloud native system.

7. The device according to claim 5 or 6, wherein an entity at the Process level is configured to perform System Application Programming Interface, API, calls between the Process level and an OS kernel, wherein for the Process level, the input module is configured to receive the performed System API calls.

8. The device according to any one of claims 1 to 7, configured to dynamically include new entities, or delete or re-configure existing entities.

9. A computer-implemented method for monitoring a Cloud Native network Function, CNF, the CNF comprising a higher-level entity and a plurality of lower-level entities included in the higher-level entity, wherein the lower-level entities are configured to communicate with each other to together provide a higher-level function performed by the higher-level entity, the method comprising:
an input step of receiving, from the plurality of lower-level entities, lower-level extracted features relating to the plurality of lower-level entities; and
a feature extraction step of obtaining higher-level extracted features relating to the higher-level entity and the plurality of lower-level entities based on the received lower-level extracted features, wherein the higher-level extracted features comprise:
for each lower-level entity:
at least one higher-level extracted feature for the each lower-level entity, representing a state of the each lower-level entity when communicating with the remaining lower-level entities,
at least one higher-level extracted feature for a relation between the each lower-level entity and the remaining lower-level entities, representing a state of the communication between the lower-level entities,
for all lower-level entities:
at least one higher-level extracted feature for a relation between the higher-level entity and all lower-level entities, representing a state of all lower-level entities when communicating with each other to together provide said function performed by the higher-level entity,
wherein the method further comprises an output step of outputting the obtained higher-level extracted features and performing at least one of security anomaly detection, predictive maintenance and performance optimization based on the higher-level extracted features.

10. A computer program comprising instructions for causing an apparatus to perform the method according to claim 9.

11. A memory storing computer readable instructions for causing an apparatus to perform the method according to claim 9.
